# EUROPEAN PATENT SPECIFICATION

(11) **EP 1 657 475 B1**
(45) Date of publication and mention of the grant of the patent: **22.04.2009**
(21) Application number: 05270077.0
(22) Date of filing: 08.11.2005
(51) Int. Cl.: F16H 61/12, F16H 59/08, F16H 63/42, G05G 1/08, G05G 1/10, F16H 61/16, F16H 61/22

(54) **Rotatable selector mechanism for a motor vehicle transmission and corresponding control method**
Drehbare Schalteinrichtung für ein Kraftfahrzeuggetriebe und entsprechendes Steuerungsverfahren
Dispositif de changement de vitesses rotatif pour boîte de vitesses de véhicule automobile et méthode de controle associée

(30) Priority: 13.11.2004 GB 0425115
(43) Date of publication of application: 17.05.2006
(73) Proprietor: JAGUAR CARS LIMITED, Whitley Coventry CV3 4LF (GB)
(72) Inventor: Pickering, Carl Anthony, Kings Meadow, Kenilworth CV8 2HU (GB); Richardson, Michael Julian, Redditch, Worcestershire B97 4SG (GB); Whelan, Alister, Leamington Spa, Warwickshire CV31 3BU (GB); Jerger, Robert, Stockton, Southam, Warwickshire CV47 8JP (GB); Hudson, Peter, Warwick, Warwickshire CV35 7BS (GB)
(74) Representative: Needle, Jacqueline

(56) References cited:
- EP-A- 1 229 272
- US-A- 4 378 474
- US-A- 5 094 115

## Description

The present invention relates to a rotatable selector mechanism for a motor vehicle transmission, more specifically an automatic or semi-automatic vehicle transmission actuated by shift-by-wire.

GB 2310693 shows a rotatable selector mechanism which includes a rotary switch with a pointer. The rotary switch can be grasped by the driver and rotated around an axis to select the operating mode of the transmission by pointing the pointer towards indicia constituting the letters PRND corresponding to Park (P), Reverse (R), Neutral (N) and Drive (D) modes respectively in the transmission. The rotation of the rotary switch transmits a control signal indicating a desired drive condition to the vehicle transmission. Such transmissions operated by shift-by-wire commonly include a wide variety of sensors, switches, and other controls. In the event that any of these components fails, the transmission may cease to function. If such a failure is detected, the transmission control unit switches to a failure or 'limp home' mode which is designed to ensure that, as far as possible, the vehicle will be drivable and safe. Generally in this mode the transmission control will attempt to maintain the current gear and the failure is indicated to the driver by means of a warning light or text message.

Despite the various warnings alerting the driver that the transmission is in limp-home mode he/she can still move the selector for selecting a selector mode that is not available, possibly causing immediate and unexpected motion of the vehicle. Furthermore, usually such shift-by-wire transmissions may include an emergency park release to shift the automatic transmission into Neutral to allow the vehicle to be towed away. This operation occurs under certain fault conditions where the selector mechanism cannot be actuated to select a transmission mode, for instance when no power can be supplied to the selector mechanism or a mechanical fault in the transmission prevents the driver from shifting into a mode other than the current mode.

It is a problem with such a known selector mechanism that, when a limp home mode occurs or the emergency park release is operated or the driver requests an unavailable transmission mode, the transmission mode shown by the pointer of the rotatable selector mechanism does not match the actual mode of the transmission. This has certain inherent disadvantages for driver convenience and safety.

EP1229272 shows a selector mechanism as recited in the preamble of claim 1 which is to provide a shifter that responds to relative movement and position of the rotary knob such that it can be programmed to reject a shift and reset itself.

It is an object of this invention to provide an improved rotatable selector mechanism which overcomes or minimises the above problem.

According to a first aspect of the invention there is provided a rotatable selector mechanism for a motor vehicle transmission having a number of operating modes, the selector mechanism having a housing, a rotary knob movable in the housing between a number of selector positions, each position being associated with a respective one of the operating modes of the transmission, a rotary selector which in normal use of the selector mechanism is connected to the rotary knob so as to rotate with the rotary knob, sensor means for sensing the position of the rotary selector and generating selector signals to a transmission control unit which in use supplies control signals to the transmission, an indexing means for maintaining the rotary knob in each of its positions, a drive correction means and clutch devices to engage the rotary selector to one of the rotary knob and the drive correction means, wherein the clutch devices and the drive corrections means in use are controlled by the transmission control unit to move the rotary selector from a selector position selected by the driver by means of the rotary knob to another selector position representative of the operating mode of the transmission by means of the drive correction means without moving the rotary knob.

Preferably, the selector mechanism further comprises a dynamic indicator which in use is arranged to indicate the operating mode of the transmission. The dynamic indicator in use is connected to the transmission control unit to be visible when the vehicle is to be driven and move with the rotary selector.

Conveniently, the dynamic indicator comprises an illuminated pointer and an arrangement of illuminated labels indicating the selector mode. The rotary knob has a top surface and the illuminated pointer is constituted by a one of several light sources circumferentially distributed behind the top surface of the rotary knob.

The selector mechanism may further comprise a retractor actuator which in use is controlled by the transmission control unit to displace the rotary knob between an active position where it can be manually moved between the selector positions by the driver of the vehicle, and an inactive position in which it is retracted inside the housing where it cannot be readily moved by the driver.

Preferably, the rotary selector comprises a detent plate having notches for cooperation with a spring-loaded detent member carried by the housing. The detent plate may have a slot which cooperates with a stop to limit the rotation of the detent plate between the two extreme selectable modes of the transmission.

Also preferably, the selector mechanism also comprises a locking device which in use is controlled by the transmission control unit to prevent rotation of the rotary knob when disconnected from the rotary selector.

Preferably, one of the selector positions is a manual mode in which position the selector mechanism is operable for use with an auxiliary selector in order to control the gear ratios of the transmission in a pulse manner.

The invention also provides, according to another aspect, a transmission control system for a motor vehicle transmission having a transmission control unit which in use is connected to a communication port at which data relating to the vehicle's operation are available and including a selector mechanism which is in accordance with said first aspect.

The invention also provides, according to a further aspect, a method of controlling a rotatable selector mechanism according to said first aspect when installed in a motor vehicle and the transmission control unit is in receipt of a data relating to the operational state of the vehicle in which the transmission control unit determines, after receiving a signal of the sensors, whether the selector mode is available and if the selector mode is unavailable the transmission control unit operates the clutch devices to engage the rotary selector to the drive correction means and disengage the rotary selector from the rotary knob, then send a command to the drive correction means to return the rotary selector to the previous gear position.

Also preferably, when the selector mechanism includes a dynamic indicator, the method includes sending a command from the transmission control unit to the dynamic indicator to indicate the mode of the transmission according to the motion of the rotary selector.

Preferably, when the selector mechanism includes an illuminated pointer having several light sources and an arrangement of illuminated labels, the transmission control unit sends a command to turn the illuminated pointer off and a command to illuminate the label of the current selector mode.

Also preferably, when the selector mechanism includes a retractor actuator, the method includes sending a command from the transmission control unit to the retractor actuator to move the rotary knob to the active position when the engine is running and to move the rotary knob to the inactive position when the engine is stopped.

Conveniently, if the transmission control unit detects or receives a failure signal, the transmission control unit sends a command to the retractor actuator to move the selector towards the inactive position from the active position.

Preferably, when the selector mechanism includes a locking device, if the transmission control unit detects or receives a failure signal, the transmission control unit sends a command to the locking device to prevent rotational movement of the rotary knob.

Conveniently when the selector mechanism includes an auxiliary selector and if the transmission control unit detects or receives a signal from the auxiliary selector, the transmission control unit sends a command to the drive correction means and the dynamic indicator so as to rotate the rotary selector and change the indication of the dynamic indicator from indicating a Drive mode to indicating a Manual mode. Similarly, if the selector mechanism is in a manual mode and the transmission control does not detect or receive a signal from the auxiliary selector for a predetermined time period, the transmission control unit may send a command to the drive correction means and the dynamic indicator so as to rotate the rotary selector and change the indication of the dynamic indicator from the Manual mode to the Drive mode.

The invention will now be described by way of example with reference to the accompanying drawings, of which: -
Fig.1 is a plan view showing a rotatable selector mechanism for a vehicle transmission according to the present invention;
Fig.2 is a perspective view of the selector mechanism shown in Fig. 1;
Fig.3 is an exploded view of the selector mechanism shown in Fig.1;
Fig.4 is a cross-section on the line IV-IV of Fig.2, the selector mechanism being shown in normal operation;
Fig.5 is a view similar to Fig.4 but with the selector mechanism in a correction operation,
Fig.6 is a plan view of the selector mechanism shown in Fig.3 but with some parts omitted to show certain components in a Park position;
Fig.7 is view similar to Fig.6 showing the components in a Drive position; and
Fig.8 is a block diagram showing a transmission control system of a motor vehicle equipped with a selector mechanism according to the present invention.

With reference to the drawings, there is shown a rotatable selector mechanism 10 for actuating an automatic vehicle transmission 11 driven by an engine 12. The rotatable selector mechanism 10 is located in an upper surface of a console mounted between a driver's seat and a passenger seat.

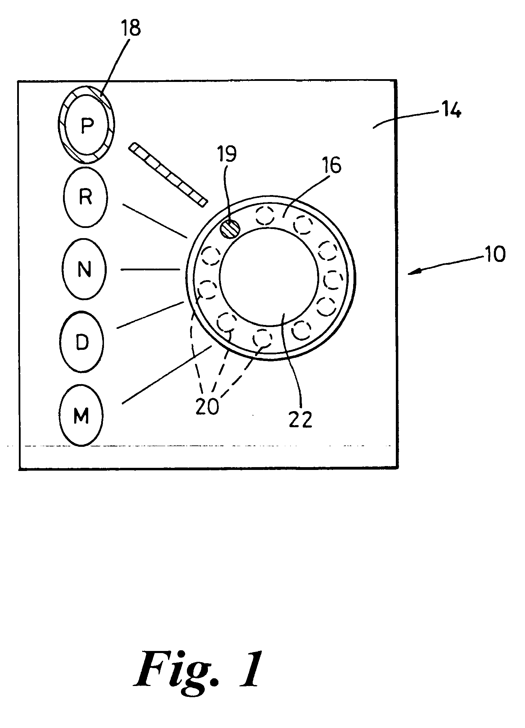

The selector mechanism 10 includes a housing formed by a base 13 and a part 14 of the console inside which a rotary handle in the form of a selector knob 15 is rotatable around a substantially vertical fixed shaft 17 mounted to the base 13. The selector knob 15 can be grasped by the driver and rotated around the shaft 17 to select the operating mode of the transmission by pointing an illuminated pointer 16 towards one of a number of labels constituted by the letters PRND. These letters correspond to the Park (P), Reverse (R), Neutral (N) and Drive (D) modes respectively in the automatic transmission (Fig.1) and are arranged in a straight line near the selector knob 15.

Each label P, R, N and D can be illuminated, e.g. by a LED (light emitting diode) 18 located underneath the upper surface of the console 14, each LED 18 being switched on or off according to the position of the illuminated pointer 16 as it will be described in further detail.

The illuminated pointer 16 is constituted by one 19 of several light sources 20, for example LEDs, circumferentially distributed behind the top surface of the selector knob 15, which is illuminated when the vehicle is to be driven, e.g. when the driver turns the engine ignition on. The arrangement of labels PRND and illuminated pointer 16 is conveniently referred to as a dynamic indicator for reasons which will be explained. In a preferred arrangement, the surface of the selector knob 15 includes a metallic centre piece 22 and a frosted transparent plastics ring 23 so that the LEDs 20 cannot be seen if not illuminated.

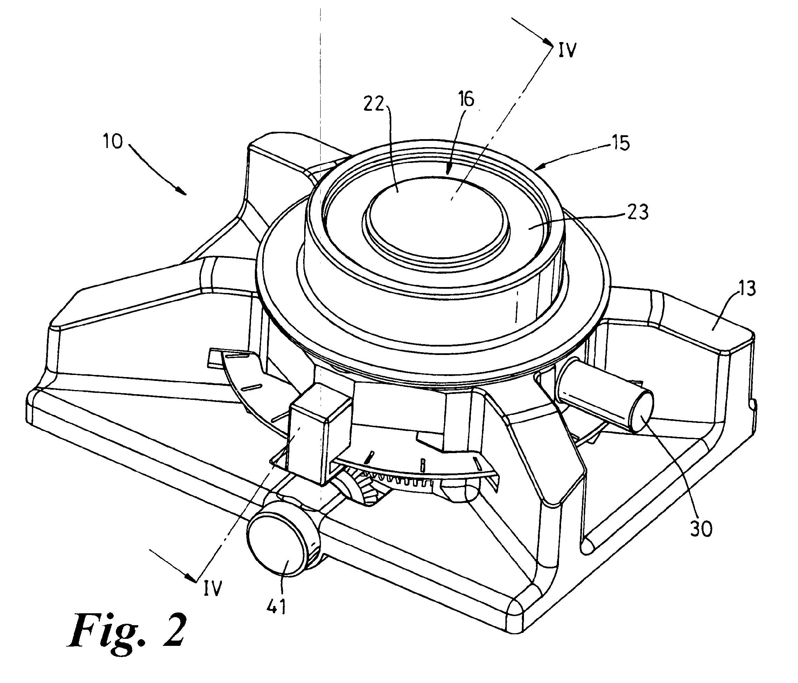

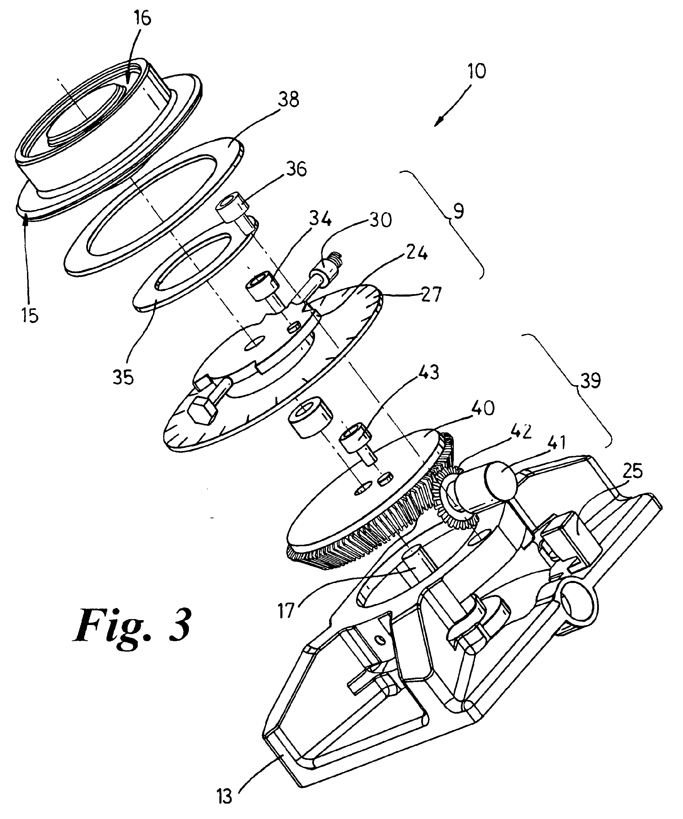

As illustrated in greater detail in Figures 2 to 8, the selector mechanism further includes, between the selector knob 15 and the base 13, a cam plate or detent plate 24 which is rotatable around the shaft 17. The detent plate 24 forms part of a rotary selector 9 which is normally connected to the selector knob 15.

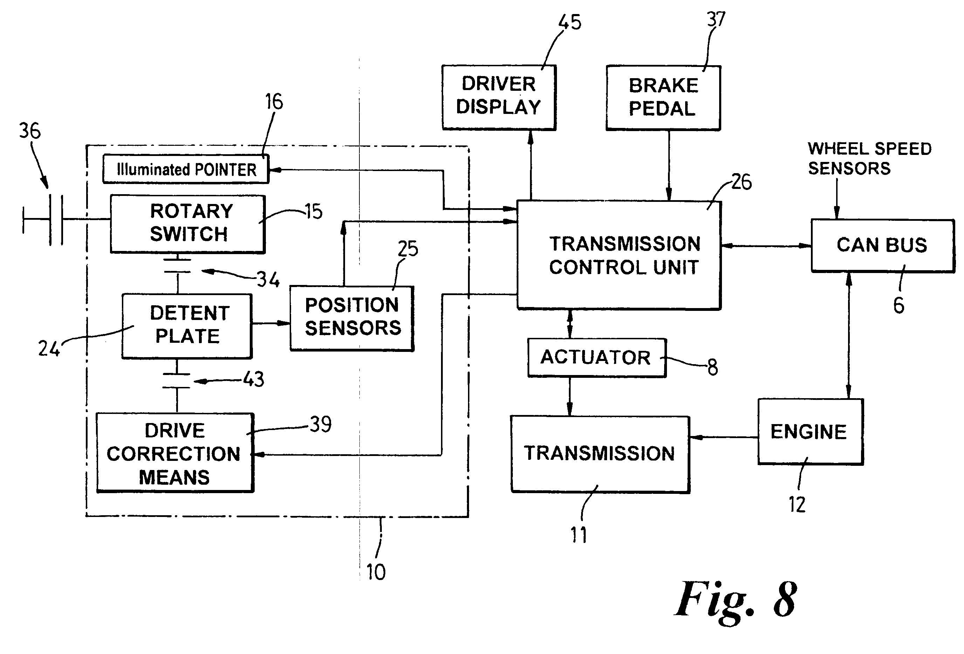

The detent plate 24 is connected to a sensor means in order to detect a position of the selector knob 15 and to transmit an input to a transmission control unit 26 (Fig.8). This sensor means includes a sensor or encoder 25 that reads scan marks on a disc 27 fixed to the detent plate 24 to provide a sensor output signal which is representative of the direction and magnitude of the motion of the detent plate 24.

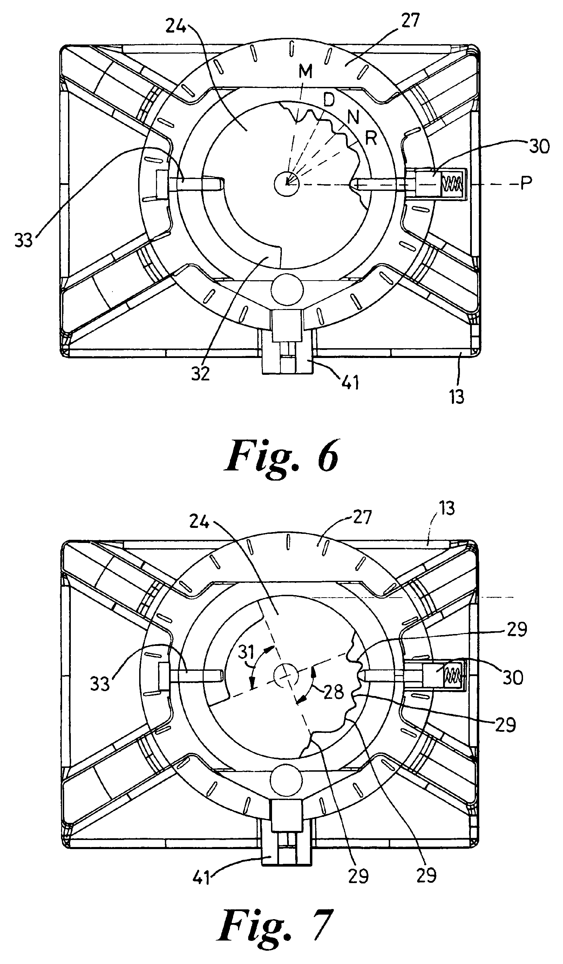

The detent plate 24 is provided on its periphery with notches 29 over a sector 28 and these can be engaged successively by a spring-loaded detent member 30 (in this example a cam detent pin) when the detent plate 24 rotates, as illustrated in Fig.6 and Fig.7. These notches 29 are arranged in such a way that each selection mode P, R, N, D and optional a manual mode (M) corresponds to an angular position of the detent plate 24. Thus the cooperation between the detent pin 30 and the notches 29 forms an indexing means ensuring the immobilization of the selector knob 15 in its different positions, respectively P, R, N and D. Furthermore, the depth and the shape of each notch are different for each position of the selector knob 15 so that not only is the driver able to feel the transition from one position to another but can also infer the mode selected by the feel of the detent.

The detent plate 24 is provided on its periphery with a slot 32 which extends over a sector 31 and this cooperates with a pin 33 which acts as a fixed end stop for the detent plate 24 when the pin 33 abuts either end of the slot 32.

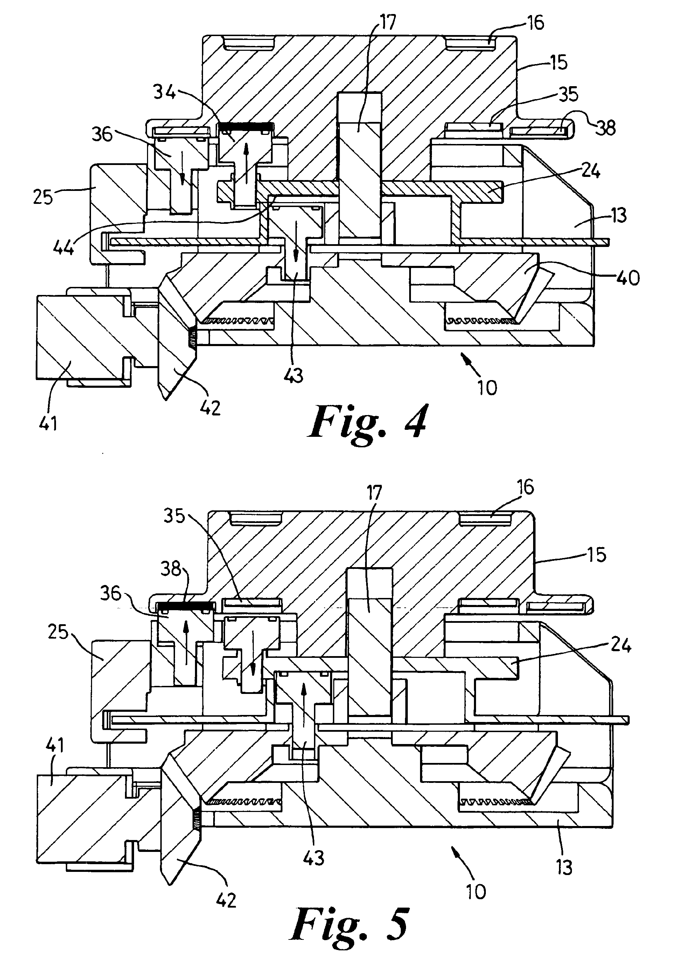

In normal operation of the selector mechanism (Fig.4), the selector knob 15 and the detent plate 24 are connected to one another by means of a first clutch device. The first clutch device comprises an electro-magnet clamp 34 vertically fixed on the detent plate 24 in front of a first steel ring 35 fixed to the selector knob 15. The electro-magnet clamp is controlled by the transmission control unit 26 in order to engage or disengage the detent plate 24 with the selector knob 15 as it will be described further.

The selector knob 15 includes a locking device controlled by the transmission control unit 26 for preventing selector knob movement under certain fault conditions or when the selector knob 15 is in Park position and a brake pedal 37 has not been depressed. The locking device is, in the example shown, a second electro-magnet clamp 36 arranged in the same way as the first electro-magnet clamp 34, the second electro-magnet clamp 36 being vertically fixed on the base 13 in front of a second steel ring 38 fixed to the selector knob 15.

The selector mechanism further includes a powered selector correction mode device or drive correction means 39 for rotating the detent plate 24 if an inappropriate selector mode position (PRND) has been selected by the driver. Inappropriate selector mode positions will be described in greater detail below. The drive correction means 39 comprises a bevel gear wheel 40 rotatable by means of an electric motor 41 and a bevel pinion 42 under the control of the transmission control unit 26. The wheel 40 includes a second clutch device arranged in the same way as the first clutch device, i.e. comprising a third electro-magnet clamp 43 fixed on the wheel 40 in front of a third steel ring 44 fixed to the detent plate 24.

The transmission control unit 26 includes a known processing logic circuit which is utilized for effecting automatic gearshifts within the transmission in a known manner.

As show in Fig.8, the transmission control unit 26 is connected to a CAN bus 6 which allows it to communicate with other control units located in the vehicle, e.g. an engine control unit. In particular, each system makes available on the CAN bus data from the sensors associated with it, data relating to its own operation and data relating to the vehicle's operation which it has derived from the information available to it. Therefore the transmission control unit 26 receives over the CAN bus the signals from wheel speed sensors and the brake pedal 37 but also from a sensor connected to an emergency park release cable (not shown) as is usually provided on vehicle transmissions operated by shift-by-wire so as to shift the automatic transmission into Neutral to allow the car to be towed away.

Conventionally the transmission control unit 26 is also connected to a driver display 45 in order to indicate the currently engaged gear of the transmission and possibly any transmission fault.

Operation of the transmission control unit and the selector mechanism is as follows.

Starting the engine causes one LED 19 of the illuminated pointer 16 on the top of the selector knob 15 and the corresponding illuminated label 18, i.e. normally P position, to turn on while stopping the engines causes of the illuminated pointer 16 and the illuminated label 18 to turn off, hence avoiding any indication of the gear mode selected.

Thus, from a Park position of the selector knob, when the driver depresses the brake pedal 37, a brake detection signal is sent over the CAN bus and is received by the transmission control unit 26 which then unlocks the selector knob 15 by de-energising the second electro-magnet clamp 36 and energises the first electro-magnet clamp 34 to connect the detent plate 24 with the selector knob 15. The driver can then select an appropriate transmission mode (Fig.4). When the new position of the detent plate 24 is detected by the encoder 25, the transmission control unit 26 checks the availability of the request and shifts the transmission by sending a command to an actuator 8 and turning on the illumination of the corresponding label.

If the transmission control unit 26 rejects the request (for example, if Reverse is selected when the vehicle is moving forward) then it sends a signal to the first electro-magnet clamp 34 to disengaged the detent plate 24 from the selector knob 15 by de-energising the first electro-magnet clamp 34 and at the same time sends a signal to the second and the third electro-magnet clamp 36, 43 in order to connect the bevel wheel 40 of the drive correction means 39 to the detent plate 24 and lock the selector knob 15 with the base 13 (Fig.5). The transmission control unit 26 then sends a command to the electric motor 41 to drive the bevel pinion 42 and return the detent plate 24 to the previous mode. The transmission control unit 26 turns off both the actual illuminated LED 19 of the dynamic pointer 16 and the illuminate label 18 selected by the driver and turns on both the illuminated label 18 of the previous mode and the appropriate LED 20. The second and the third electro-magnet clamps 36, 43 can then be disengaged while the first electro-magnet clamp 34 is engaged so that the rotatable selector mechanism can again be operated by the driver.

When the selector knob 15 comprises a manual mode position M the gear ratios can be controlled in a pulse manner to select the next highest (+) or lowest (-) forward gear ratio by an auxiliary selector, e.g. by a pair of paddles located near the steering wheel. The transmission control unit 26 may then send a command to the motor 41 and the third electro-magnet clamp 43 to rotate the detent plate 24 without moving the selector knob 15 from a Drive mode position to a Manual mode position but only changing the LED illumination 20 of the illuminated pointer 16 and the corresponding label 18 when the driver starts to use the auxiliary selector. Similarly, the transmission control unit 26 may send a command to motor 41 and the third electro-magnet clamp 43 to rotate the detent plate 24 without moving the selector knob 15 from the Manual mode position to the Drive mode position but only changing the LED illumination 20 of the illuminated pointer 16 and the corresponding label 18 when the auxiliary selector is not used for a predetermined time period.

Under a fault condition of the transmission, the transmission control unit 26 will send a command to lock the selector knob 15 in its current position and send a message to the display to alert the driver that the transmission is in failure mode. In a preferred arrangement, all the electro-magnet clamps 34, 36 and 43 will be engaged.

This method of controlling the selector knob 15 with a dynamic indicator and a drive correction means 39 enables several advantages. Firstly, it makes it possible to comply with legal requirements in case of power failure or when the park release is operated with the engine off when no indication of the current transmission mode will be indicated by the dynamic indicator. Secondly, in the situation where the driver moves the selector knob to a unavailable mode, the dynamic indicator and the rotary selector 9 will be moved to indicate the actual transmission mode. In addition, the selector knob 15 will not move but only the detent plate 24 and the dynamic indicator, thus avoiding any attempts by the driver to stop or hold the selector knob 15 in order to prevent the correction by the transmission control unit 26. Furthermore, the arrangement of a detent plate 24 which co-operates with the detent pin 30 enables the provision of a shift-by-wire selector which has multi-stable positions giving, from the driver's viewpoint, a selector mechanism close to the conventional automatic transmission selector lever having for each position mode of the selector a mechanical detent with a configurable force profile.

Although the invention has been described by way of example with reference to a specific embodiment of the invention various modifications or additions may be made without departing from the invention.

For example, the rotatable selector mechanism may include a retractor actuator, e.g. an electric motor, controlled by the transmission control unit 26, that retracts the selector knob inside the housing into an inactive position where it cannot be grasped by the driver. Thus, the driver can physically understand that the vehicle is in a failure mode and is discouraged from driving the vehicle for long periods in a faulty condition. The retractor actuator may also be controlled by the transmission control unit 26 when the engine is started or stopped. Starting the engine causes the selector knob 15 to rise from the housing while stopping the engine causes the selector knob to drop into the housing. Thus, the selector knob 15 can be displaced either to an inactive position in which it is retracted inside the housing when the driver turns the engine ignition off or an active position in which it projects outside the housing when the driver turns the engine ignition on.

In a modification, the illuminated pointer could be replaced by a mechanical pointer which can retract into a hidden position when the engine ignition is turned off or extend into a visible position when the engine ignition is turned on. The retractable pointer may be located inside or outside the selector knob. Also the electro-magnet clamp described above could be replaced by mechanical devices operating the same function. Alternatively, the dynamic indicator could simply comprise illuminated labels, the label corresponding to the current mode of the transmission being brighter than the others.

## Claims

1. A rotatable selector mechanism (10) for a motor vehicle transmission (11) having a number of operating modes, the selector mechanism (10) having a housing (13, 14), a rotary knob (15) movable in the housing between a number of selector positions, each position being associated with a respective one of the operating modes of the transmission, a rotary selector (9) which in normal use of the selector mechanism is connected to the rotary knob (15) so as to rotate with the rotary knob, and sensor means (25) for sensing the position of the rotary selector and generating selector signals to a transmission control unit (26) which in use supplies control signals to the transmission (11), an indexing means (30, 29) for maintaining the rotary knob (15) in each of its positions, **characterised in that** the selector mechanism further comprises a drive correction means (39) and clutch devices (34, 43) to engage the rotary selector (9) to one of the rotary knob (15) and the drive correction means (39), and **in that** the clutch devices (34, 43) and the drive corrections means (39) in use are controlled by the transmission control unit (26) to move the rotary selector (9) from a selector position selected by the driver by means of the rotary knob (15) to another selector position representative of the operating mode of the transmission (11) by means of the drive correction means (39) without moving the rotary knob (15).

2. A selector mechanism as claimed in claim 1 and further comprising a dynamic indicator (16) which in use is arranged to indicate the operating mode of the transmission (11).

3. A selector mechanism as claimed in claim 2 in which the dynamic indicator (16) in use is connected to the transmission control unit (26) to be visible when the vehicle is to be driven and move with the rotary selector (9).

4. A selector mechanism as claimed in claimed 2 in which the dynamic indicator (16) comprises an illuminated pointer (19) and an arrangement of illuminated labels (18) indicating the selector mode.

5. A selector mechanism as claimed in claim 4 wherein the rotary knob (15) has a top surface and the illuminated pointer (19) is constituted by a one of several light sources (20) circumferentially distributed behind the top surface of the rotary knob (15).

6. A selector mechanism as claimed in any preceding claim and further comprising a retractor actuator which in use is controlled by the transmission control unit (26) to displace the rotary knob (15) between an active position where it can be manually moved between the selector positions by the driver of the vehicle, and an inactive position in which it is retracted inside the housing where it cannot be readily moved by the driver.

7. A selector mechanism as claimed in any claims 1 to 6 and further comprising a spring-loaded detent member (30) carried by the housing (13, 14) and wherein the rotary selector (9) comprises a detent plate (24) having notches (29) for cooperation with the spring-loaded detent member (30).

8. A selector mechanism as claimed in claim 7 in which the detent plate (24) has a slot (32) which cooperates with a stop (33) to limit the rotation of the detent plate (24) between the two extreme selectable modes of the transmission.

9. A selector mechanism as claimed in claim 7 or claim 8, in which the sensors for sensing the position of the selector comprise an encoder (25).

10. A selector mechanism as claimed in any preceding claim and further comprising a locking device (36) which in use is controlled by the transmission control unit (26) to prevent rotation of the rotary knob (15) when disconnected from the rotary selector (9).

11. A selector mechanism as claimed in any preceding claim wherein one of the selector positions is a manual mode in which position the selector mechanism is operable for use with an auxiliary selector in order to control the gear ratios of the transmission in a pulse manner.

12. A transmission control system for a motor vehicle transmission having a transmission control unit (26) which in use is connected to a communication port at which data relating to the vehicle's operation are available and including a selector mechanism which is in accordance with any one of claims 1 to 11.

13. A method of controlling a rotatable selector mechanism as claimed in any of claims 1 to 11 when installed in a motor vehicle and the transmission control unit (26) is in receipt of a data relating to the operational state of the vehicle in which the transmission control unit (26) determines, after receiving a signal of the sensors, whether the selector mode is available and if the selector mode is unavailable the transmission control unit (26) operates the clutch devices (34, 43) to engage the rotary selector (9) to the drive correction means (39) and disengage the rotary selector (9) from the rotary knob (15), then sends a command to the drive correction means (39) to return the rotary selector (9) to the previous selector position.

14. A method as claimed in claim 13 when the selector mechanism is according to any of claims 2 to 5 including sending a command from the transmission control unit (26) to the dynamic indicator (16) to indicate the mode of the transmission according to the motion of the rotary selector (9).

15. A method as claimed in claimed 14 when the selector mechanism is according to claim 4, in which the transmission control unit (26) sends a command to turn the illuminated pointer off and a command to illuminate the label of the current selector mode.

16. A method as claimed in any claims 13 to 15 when the selector mechanism is according to claim 6, including sending a command from the transmission control unit (26) to the retractor actuator to move the rotary knob (15) to the active position when the engine is running and to move the rotary knob (15) to the inactive position when the engine is stopped.

17. A method as claimed in claim 16 in which, if the transmission control unit (26) detects or receives a failure signal, the transmission control unit (26) sends a command to the retractor actuator to move the rotary knob (15) towards the inactive position from the active position.

18. A method as claimed in any claims 13 to 17, when the selector mechanism is according to claim 10, in which, if the transmission control unit detects or receives a failure signal, the transmission control unit sends a command to the locking device (36) to prevent rotational movement of the rotary knob (15).

19. A method as claimed in any claims 13 to 18, when the selector mechanism is according to claim 11, the latter being taken dependent on any of claims 2 to 5, in which, if the transmission control unit (26) detects or receives a signal from the auxiliary selector, the transmission control unit sends a command to the drive correction means (39) and the dynamic indicator (16) so as to rotate the rotary selector (9) and change the indication of the dynamic indicator (16) from indicating a Drive mode to indicating a Manual mode.

20. A method as claimed in claim 19 in which, if the selector mechanism is in a manual mode and the transmission control does not detect or receive a signal from the auxiliary selector for a predetermined time period, the transmission control unit (26) sends a command to the drive correction means (39) and the dynamic indicator (16) so as to rotate the rotary selector (9) and change the indication of the dynamic indicator (16) from the Manual mode to the Drive mode.

## Patentansprüche

1. Drehbare Schalteinrichtung (10) für ein Kraftfahrzeuggetriebe (11) mit einer Anzahl von Betriebsmodi, wobei die Schalteinrichtung (10) aufweist: ein Gehäuse (13, 14), einen innerhalb des Gehäuses zwischen einer Anzahl von Schaltstellungen beweglichen Drehknebel (15), wobei jede Stellung zu einer jeweiligen Getriebe-Betriebsmodus-Stellung gehört, einen Drehwählschalter (9), der bei der üblichen Verwendung der Schalteinrichtung derart mit einem Drehknebel (15) verbunden ist, dass er sich mit dem Drehknebel dreht, und eine Sensorvorrichtung (25) zum Abfühlen der Drehwählschalterstellung und Erzeugen von Schaltsignalen an eine Getriebesteuerungseinheit (26), die beim Gebrauch Steuerungssignale an das Getriebe (11) liefert, eine Umschaltungsvorrichtung (30, 29), damit der Drehknebel (15) seine jeweiligen Stellungen beibehalten kann, **dadurch gekennzeichnet, dass** die Schalteinrichtung weiterhin umfasst: eine Fahrtstufenkorrekturvorrichtung (39) und Kupplungselemente (34, 43), um einen Eingriff des Drehwählschalters (9) in den Drehknebel (15) und/oder die Fahrstufenkorrekturvorrichtung (39) herzustellen und dass die Kupplungselemente (34, 43) und die Fahrstufenkorrekturvorrichtung (39) im Gebrauch durch die Getriebesteuerungseinheit (26) gesteuert werden, um den Drehwählschalter (9) mittels des Drehknebels (15) aus einer vom Fahrer gewählten Schalterstellung mittels der Fahrstufenkorrekturvorrichtung (39) ohne Bewegen des Drehknebels (15) in eine andere Schalterstellung zu bewegen, die für den Betriebsmodus des Getriebes (11) bezeichnend ist.

2. Schalteinrichtung nach Anspruch 1 und die weiterhin eine dynamische Anzeigevorrichtung (16) umfasst, die im Gebrauch angeordnet ist, um den Betriebsmodus des Getriebes (11) anzuzeigen.

3. Schalteinrichtung nach Anspruch 2, bei der die dynamische Anzeigevorrichtung (16) im Gebrauch sichtbar mit der Getriebesteuerungseinheit (26) verbunden ist, wenn das Fahrzeug mit dem Drehwählschalter (9) angesteuert und mit dem Drehwählschalter (9) bewegt werden soll.

4. Schalteinrichtung nach Anspruch 2, wobei die dynamische Anzeigevorrichtung (16) einen beleuchteten Anzeiger (19) und eine Anordnung mit beleuchteten Etiketten (18) umfasst, welche den Schaltmodus anzeigen.

5. Schalteinrichtung nach Anspruch 4, wobei der Drehknebel (15) zualleroberst eine Fläche aufweist und die beleuchtete Anzeigevorrichtung (19) aus einer von mehreren Lichtquellen (20) gebildet wird, die ringförmig hinter der allerobersten Fläche des Drehknebels (15) verteilt sind.

6. Schalteinrichtung nach einem der vorherigen Ansprüche und die weiterhin umfasst: einen Einziehbetätiger, der im Gebrauch von der Getriebesteuerungseinheit (26) gesteuert wird, um den Drehknebel (15) zwischen einer aktiven Stellung, wo ihn der Fahrer des Fahrzeugs von Hand zwischen den Schalterstellungen bewegen kann, und einer inaktiven Stellung, in der er in das Innere des Gehäuses zurückgezogen ist, wo ihn der Fahrer nicht ohne Weiteres bewegen kann, zu verschieben.

7. Schalteinrichtung nach einem der Ansprüche 1 bis 6 und die weiterhin umfasst: ein federbelastetes Arretierungselement (30), das von dem Gehäuse (13, 14) getragen wird und wobei der Drehwählschalter (9) eine Arretierungsplatte (24) mit Kerben (29) zum Zusammenwirken mit dem federbelasteten Arretierungselement umfasst.

8. Schalteinrichtung nach Anspruch 7, wobei die Arretierungsplatte (24) einen Schlitz (32) aufweist, der mit einem Anschlag (33) zusammenwirkt, um die Rotation der Arretierungsplatte (24) zwischen den beiden schaltbaren Getriebeendmodi zu beschränken.

9. Schalteinrichtung nach Anspruch 7 oder Anspruch 8, wobei die Sensoren zum Abfühlen der Wählschalterstellung einen Messgeber (25) umfassen.

10. Schalteinrichtung nach einem der vorherigen Ansprüche und die weiterhin eine Arretierung (36) umfasst, die im Gebrauch durch die Getriebesteuerungseinheit (26) gesteuert wird, um eine Rotation des Drehknebels (15) bei Unterbrechung der Verbindung zum Drehwählschalter (9) zu verhindern.

11. Schalteinrichtung nach einem der vorherigen Ansprüche, wobei es sich bei einer der Wählschalterstellungen um einen manuellen Modus handelt, in dem die Schalteinrichtung für den Gebrauch mit einem Hilfsschalter betreibbar ist, um die Getriebe-Fahrstufen über Pulse steuern zu können.

12. Getriebesteuerungssystem für ein Kraftfahrzeuggetriebe, das eine Getriebesteuerungseinheit (26) aufweist, die im Gebrauch mit einer Schnittstelle verbunden ist, in der Betriebsdaten des Fahrzeugs vorhanden sind und die eine Schalteinrichtung nach einem der Ansprüche 1 bis 11 einschließt.

13. Verfahren zum Steuern einer drehbaren Schalteinrichtung nach einem der Ansprüche 1 bis 11, wenn sie in einem Kraftfahrzeug eingebaut ist und die Getriebesteuerungseinheit (26) auf den Betriebszustand des Fahrzeugs bezogene Daten erhalten hat, bei der die Getriebesteuerungseinheit (26) nach Erhalt eines Sensorsignals entscheidet, ob der Schaltermodus vorliegt, und die Getriebesteuerungseinheit (26) bei nicht vorliegendem Schaltermodus die Kupplungselemente (34, 43) betreibt, um den Drehwählschalter (9) in die Fahrstufenkorrekturvorrichtung (39) eingreifen zu lassen und den Drehwählschalter (9) von dem Drehknebel (15) zu lösen, daraufhin einen Befehl an die Fahrstufenkorrekturvorrichtung (39) sendet, damit der Drehwählschalter (9) wieder die vorherige Schalterstellung einnimmt.

14. Verfahren nach Anspruch 13, wenn die Schalteinrichtung einem der Ansprüche 2 bis 5 entspricht, einschließlich des Sendens eines Befehls von der Getriebesteuerungseinrichtung (26) an die dynamische Anzeigevorrichtung (16), um den Getriebemodus entsprechend der Bewegung des Drehwählschalters (9) anzuzeigen.

15. Verfahren nach Anspruch 14, wenn die Schalteinrichtung dem Anspruch 4 entspricht, in dem die Getriebesteuerungseinheit (26) einen Befehl zum Abschalten des beleuchteten Anzeigers und einen Befehl zum Beleuchten der Etiketten des aktuellen Schaltermodus sendet.

16. Verfahren nach einem der Ansprüche 13 bis 15, wenn die Schalteinrichtung Anspruch 6 entspricht, einschließlich des Sendens eines Befehls von der Getriebesteuerungseinheit (26) an den Einziehbetätiger, um den Drehknebel (15) bei laufendem Motor in die aktive Stellung und den Drehknebel (15) bei stehendem Motor in die inaktive Stellung zu bewegen.

17. Verfahren nach Anspruch 16, bei dem die Getriebesteuerungseinheit (26)beim Detektieren eines Ausfallsignals oder Erhalt eines Befehls durch die Getriebesteuerungseinheit (26) einen Befehl an den Einziehbetätiger sendet, um den Drehknebel (15) aus der aktiven Stellung hin zu der inaktiven Stellung zu bewegen.

18. Verfahren nach einem der Ansprüche 13 bis 17, wenn die Schalteinrichtung dem Anspruch 10 entspricht, bei dem die Getriebesteuerungseinheit beim Detektieren oder Erhalt eines Ausfallsignals durch die Getriebesteuerungseinheit einen Befehl an die Arretierung (36) sendet, um eine Drehbewegung des Drehknebels (15) zu verhindern.

19. Verfahren nach einem der Ansprüche 13 bis 18, wenn die Schalteinrichtung dem Anspruch 11 entspricht, wobei Letzterer als von einem der Ansprüche 2 bis 5 abhängig gilt, wobei die Getriebesteuerungseinheit einen Befehl an die Fahrstufenkorrektureinrichtung (39) und die dynamische Anzeigevorrichtung (16) schickt, wenn die Getriebesteuerungseinheit (26) ein Signal aus dem Hilfsschalter detektiert oder empfängt, damit sich der Drehwählschalter (9) dreht und die Anzeige der dynamischen Anzeigevorrichtung (16) von der Anzeige eines Fahrstufenmodus zur Anzeige eines manuellen Modus wechselt.

20. Verfahren nach Anspruch 19, wobei die Getriebesteuerungseinheit (26) einen Befehl an die Fahrstufenkorrektureinrichtung (39) und die dynamische Anzeigevorrichtung (16) sendet, um den Drehwählschalter (9) zum Rotieren zu bringen und die Anzeige der dynamischen Anzeigevorrichtung (16) vom manuellen Modus zum Fahrstufen-Modus zu verändern, wenn sich die Schalteinrichtung im manuellen Modus befindet und die Getriebesteuerung innerhalb eines vorgegebenen Zeitraums weder ein Signal vom Nebenschalter detektiert noch erhält.

## Revendications

1. Mécanisme rotatif de sélection de vitesse (10) pour une transmission de véhicule motorisé (11) possédant un nombre de modes de fonctionnement, le mécanisme de sélection de vitesse (10) possédant un boîtier (13, 14), un bouton rotatif (15) mobile dans le boîtier entre un nombre de positions de sélection de vitesse, chaque position étant associée à un mode respectif des modes de fonctionnement de la transmission, un dispositif rotatif de sélection de vitesse (9) qui, durant l'utilisation normale du mécanisme de sélection de vitesse, est connecté au bouton rotatif (15) afin de tourner avec le bouton rotatif, des moyens détecteurs (25) pour détecter la position du dispositif rotatif de sélection de vitesse et générer des signaux de sélection de vitesse à une unité de commande de transmission (26) qui, durant l'utilisation, fournit des signaux de commande à la transmission (11), des moyens d'indexage (30, 29) pour maintenir le bouton rotatif (15) dans chacune de ses positions, **caractérisé en ce que** le mécanisme de sélection de vitesse comprend en outre des moyens de correction de conduite (39) et des dispositifs d'embrayage (34, 43) pour mettre en prise le dispositif rotatif de sélection de vitesse (9) avec l'un parmi le bouton rotatif (15) et les moyens de correction de conduite (39), et **en ce que** les dispositifs d'embrayage (34, 43) et les moyens de correction de conduite (39), en utilisation, sont commandés par l'unité de commande de transmission (26) pour déplacer le dispositif rotatif de sélection de vitesse (9) d'une position de sélection de vitesse sélectionnée par le conducteur au moyen du bouton rotatif (15) à une autre position de sélection de vitesse représentative du mode de fonctionnement de la transmission (11) au moyen des moyens de correction de conduite (39) sans déplacer le bouton rotatif (15).

2. Mécanisme de sélection de vitesse selon la revendication 1, et comprenant en outre un indicateur dynamique (16) qui, en utilisation, est agencé pour indiquer le mode de fonctionnement de la transmission (11).

3. Mécanisme de sélection de vitesse selon la revendication 2, dans lequel l'indicateur dynamique (16), en utilisation, est connecté à l'unité de commande de transmission (26) pour être visible lorsque le véhicule doit être conduit et se déplacer avec le dispositif rotatif de sélection de vitesse (9).

4. Mécanisme de sélection de vitesse selon la revendication 2, dans lequel l'indicateur dynamique (16) comprend une aiguille éclairée (19) et un agencement de plots éclairés (18) indiquant le mode de sélection de vitesse.

5. Mécanisme de sélection de vitesse selon la revendication 4, dans lequel le bouton rotatif (15) possède une surface supérieure et l'aiguille éclairée (19) est constituée par une parmi plusieurs sources lumineuses (20) distribuées de façon circonférentielle derrière la surface supérieure du bouton rotatif (15.

6. Mécanisme de sélection de vitesse selon l'une quelconque des revendications précédentes, et comprenant en outre un actionneur de rétraction qui, en utilisation, est commandé par l'unité de commande de transmission (26) pour déplacer le bouton rotatif (15) entre une position active, où il peut être déplacé manuellement entre les positions de sélection de vitesse par le conducteur du véhicule, et une position inactive, dans laquelle il est rétracté à l'intérieur du boîtier où il ne peut pas être déplacé facilement par le conducteur.

7. Mécanisme de sélection de vitesse selon l'une quelconque des revendications 1 à 6, et comprenant en outre un élément d'encliquetage à ressort (30) supporté par le boîtier (13, 14) et dans lequel le dispositif rotatif de sélection de vitesse (9) comprend une plaque d'encliquetage (24) possédant des encoches (29) pour une coopération avec l'élément d'encliquetage à ressort (30.

8. Mécanisme de sélection de vitesse selon la revendication 7, dans lequel la plaque d'encliquetage (24) possède une fente (32) qui coopère avec une butée (33) pour limiter la rotation de la plaque d'encliquetage (24) entre les deux modes extrêmes sélectionnables de la transmission.

9. Mécanisme de sélection de vitesse selon la revendication 7 ou la revendication 8, dans lequel les détecteurs pour détecter la position du dispositif de sélection comprennent un codeur (25).

10. Mécanisme de sélection de vitesse selon l'une quelconque des revendications précédentes, et comprenant en outre un dispositif de verrouillage (36) qui, en utilisation, est commandé par l'unité de commande de transmission (26) pour empêcher la rotation du bouton rotatif (15) lorsqu'il est déconnecté du dispositif rotatif de sélection de vitesse (9).

11. Mécanisme de sélection de vitesse selon l'une quelconque des revendications précédentes, dans lequel une des positions de sélection de vitesse est un mode manuel dans laquelle position le mécanisme de sélection de vitesse est opérationnel pour être utilisé avec un dispositif de sélection auxiliaire afin de commander les rapports de vitesse de la transmission par impulsion.

12. Système de commande de transmission pour une transmission de véhicule motorisé possédant une unité de commande de transmission (26) qui, en utilisation, est connectée à un port de communication auquel des données concernant le fonctionnement du véhicule sont disponibles et comprenant un mécanisme de sélection de vitesse selon l'une quelconque des revendications 1 à 11.

13. Procédé de commande d'un mécanisme rotatif de sélection de vitesse selon l'une quelconque des revendications 1 à 11, lorsqu'il est installé dans un véhicule motorisé, l'unité de commande de transmission (26) recevant des données concernant l'état de fonctionnement du véhicule, dans lequel l'unité de commande de transmission (26) détermine, après avoir reçu un signal des détecteurs, si le mode de sélection de vitesse est disponible et, si le mode de sélection de vitesse est indisponible, l'unité de commande de transmission (26) actionne les dispositifs d'embrayage (34, 43) pour mettre le dispositif rotatif de sélection de vitesse (9) en prise avec les moyens de correction de conduite (39) et met le dispositif rotatif de sélection de vitesse (9) hors de prise avec le bouton rotatif (15), puis envoie une commande aux moyens de correction de conduite (39) pour remettre le dispositif rotatif de sélection de vitesse (9) dans la position précédente de sélection de vitesse.

14. Procédé selon la revendication 13, lorsque le mécanisme de sélection de vitesse est selon l'une quelconque des revendications 2 à 5, comprenant l'envoi d'une commande à partir de l'unité de commande de transmission (26) à l'indicateur dynamique (16) pour indiquer le mode de la transmission selon le mouvement du dispositif rotatif de sélection de vitesse (9).

15. Procédé selon la revendication 14, lorsque le mécanisme de sélection de vitesse est selon la revendication 4, dans lequel l'unité de commande de transmission (26) envoie une commande pour éteindre l'aiguille éclairée et une commande pour éclairer le plot du mode actuel de sélection de vitesse.

16. Procédé selon l'une quelconque des revendications 13 à 15, lorsque le mécanisme de sélection de vitesse est selon la revendication 6, comprenant l'envoi d'une commande à partir de l'unité de commande de transmission (26) à l'actionneur de rétraction pour déplacer le bouton rotatif (15) jusqu'à la position active lorsque le moteur tourne et pour déplacer le bouton rotatif (15) jusqu'à la position inactive lorsque le moteur est arrêté.

17. Procédé selon la revendication 16 dans lequel, si l'unité de commande de transmission (26) détecte ou reçoit un signal de panne, l'unité de commande de transmission (26) envoie une commande à l'actionneur de rétraction pour déplacer le bouton rotatif (15) vers la position inactive à partir de la position active.

18. Procédé selon l'une quelconque des revendications 13 à 17, lorsque le mécanisme de sélection de vitesse est selon la revendication 10, dans lequel, si l'unité de commande de transmission détecte ou reçoit un signal de panne, l'unité de commande de transmission envoie une commande au dispositif de verrouillage (36) pour empêcher le mouvement de rotation du bouton rotatif (15).

19. Procédé selon l'une quelconque des revendications 13 à 18, lorsque le mécanisme de sélection de vitesse est selon la revendication 11,ce dernier devant être pris en dépendance de l'une quelconque des revendications 2 à 5 dans lequel, si l'unité de commande de transmission (26) détecte ou reçoit un signal à partir du dispositif de sélection de vitesse auxiliaire, l'unité de commande de transmission envoie une commande aux moyens de correction de conduite (39) et à l' indicateur dynamique (16) afin de faire tourner le dispositif rotatif de sélection de vitesse (9) et de changer l'indication de l'indicateur dynamique (16) de l'indication d'un mode Conduite à l'indication d'un mode Manuel.

20. Procédé selon la revendication 19 dans lequel, si le mécanisme de sélection de vitesse est dans un mode manuel et la commande de transmission ne détecte pas ou ne reçoit pas de signal à partir du dispositif de sélection de vitesse auxiliaire pendant une période prédéterminée, l'unité de commande de transmission (26) envoie une commande aux moyens de correction de conduite (39) et à l' indicateur dynamique (16) afin de faire tourner le dispositif rotatif de sélection de vitesse (9) et de changer l'indication de l'indicateur dynamique (16) de l'indication du mode Manuel au mode de Conduite.
